Europäisches Patentamt

European Patent Office

Office européen des brevets

(11) Veröffentlichungsnummer: **0 368 199**
**A1**

## (12) EUROPÄISCHE PATENTANMELDUNG

(21) Anmeldenummer: 89120492.7

(22) Anmeldetag: 06.11.89

(51) Int. Cl.⁵: **G02F 1/01, G02F 1/133, B05D 1/40, B05C 1/02**

(30) Priorität: 08.11.88 DE 3837828

(43) Veröffentlichungstag der Anmeldung:
**16.05.90 Patentblatt 90/20**

(84) Benannte Vertragsstaaten:
**DE FR GB IT NL**

(71) Anmelder: **Nokia Unterhaltungselektronik (Deutschland) GmbH**
**Östliche Karl-Friedrich-Strasse 132**
**D-7530 Pforzheim(DE)**

(72) Erfinder: **Brosig, Stefan, Dr.**
**Teckstrasse 51 B**
**D-7000 Stuttgart(DE)**

(54) **Verfahren und Vorrichtung zum Beschichten einer Substratplatte für einen flachen Anzeigeschirm.**

(57) Bei einem Verfahren zum Aufbringen einer ,dünnen Schicht auf eine Substratplatte (10) für einen flachen Anzeigeschirm wird eine Rakel (12) verwendet, die so über die Substratoberfläche gezogen wird, um einen Film (18) einer zuvor aufgebrachten Flüssigkeit zu erzielen, daß der ihrer freien Längskante benachbarte Bereich (16) im wesentlichen parallel zur Substratoberfläche verläuft.

Dieses Verfahren ist besonders vorteilhaft beim Aufbringen einer Orientierungsschicht für ein Flüssigkristalldisplay. Dies, weil durch die Flüssigkeitsströmung zwischen der Substratoberfläche und dem Rakelrandbereich (16) ein Ausrichten von Polymerketten erfolgt.

FIG.1

EP 0 368 199 A1

**Verfahren und Vorrichtung zum Beschichten einer Substratplatte für einen flachen Anzeigeschirm**

TECHNISCHES GEBIET

Die Erfindung betrifft ein Verfahren und eine Vorrichtung zum Aufbringen einer dünnen Schicht auf eine Substratplatte für einen flachen Anzeigeschirm, insbesondere für ein Flüssigkristalldisplay.

STAND DER TECHNIK

Dünne Schichten einer Substanz werden dadurch auf Substratplatten aufgebracht, daß die Substanz in flüssiger Form in der gewünschten Flächenmenge auf der Substratplatte verteilt werden und dann die verteilte Substanz ausgehärtet wird. Die Substanz kann dadurch in flüssiger Form vorliegen, daß sie geschmolzen, gelöst oder dispergiert ist. Das Aushärten kann durch Trocknen, Belichten und/oder Erhitzen herbeigeführt werden. Das Verteilen der flüssigen Substanz erfolgt durch Tauchen, durch Sprühen, durch Spincoating oder durch Drucken.

Zum Herstellen relativ dicker Schichten ist es auch bekannt, eine Rakel zu verwenden, die mit vorgegebenem Abstand ihrer freien Längskante zur Substratplatte über diselbe gezogen wird. Auf der Substratplatte wurde zunächst die Substanz aufgebracht, z. B. als Pastenstrang entlang einer Kante. Wird die Rakel von dieser Kante aus über die ganze Substratplatte gezogen, ergibt sich eine Schicht, deren Dicke vor dem Aushärten dem Abstand zwischen der freien Längskante der Rakel und der Substratoberfläche entspricht.

Der Erfindung liegt die Aufgabe zugrunde, ein weiteres Verfahren und eine weitere Vorrichtung zum Aufbringen einer dünnen Schicht auf eine Substratplatte für einen flachen Anzeigeschirm anzugeben.

DARSTELLUNG DER ERFINDUNG

Die Erfindung ist für das Verfahren durch die Merkmale von Anspruch 1 und für die Vorrichtung durch die Merkmale von Anspruch 7 gegeben. Vorteilhafte Weiterbildungen und Ausgestaltungen des Verfahrens sind Gegenstand der Unteransprüche 2 - 6. Eine vorteilhafte Ausgestaltung der Vorrichtung ist durch Anspruch 8 gegeben. Die in den verschiedenen Ansprüchen angegebenen Merkmale können beliebig miteinander kombiniert werden, insoweit sie sich nicht offensichtlich gegenseitig ausschließen.

Beim erfindungsgemäßen Verfahren wird wie bei bekannten Verfahren eine Rakel verwendet, jedoch wird diese nicht mehr im wesentlichen rechtwinklig stehend unter Einhaltung eines Spaltes über die Substratplatte geführt, sondern sid wird beinahe liegend über die Substratplatte gezogen. Es muß jedenfalls zumindest der ihrer freien Längskante benachbarte Bereich im wesentlichen parallel zur Substratoberfläche verlaufen, wenn sie über die Platte gezogen wird. Die Schichtdicke ist in diesem Fall durch die Viskosität der zu verteilenden Substanz und durch die Kraft bestimmt, mit der der genannte Bereich auf die unter ihm liegende Flüssigkeitsschicht drückt. Diese Kraft ist durch die Steifigkeit des Rakelmaterials und den Winkel bestimmt, unter dem der ihrer gehaltenen Längskante benachbarte Bereich zur Substratoberfläche geführt wird. Es ist von besonderem Vorteil, eine Rakel zu verwenden, die zumindest in dem ihrer freien Längskante benachbarten Bereich weichelastisch ausgebildet ist. Dies, damit nicht kleine Änderungen im Winkel auf der Halterungsseite zu zu großen Änderungen der Aufdrückkraft führen. Substanzen, die auf einer Substratplatte für einen flachen Anzeigeschirm in flüssiger Form aufgebracht werden, sind häufig gelöste Polymere. Es besteht die Gefahr, daß die verwendeten Lösungsmittel auch hochpolymerisierte Kunststoffe, z. B. Siliconkautschuk, angreifen. Weniger angriffsanfällig sind fluorierte Polymere, weswegen es von Vorteil ist, derartige Materialien für eine erfindungsgemäße Rakel zu verwenden.

Das erfindungsgemäße Beschichtungsverfahren ist insbesondere zum Aufbringen der Orientierungsschicht bei einem Flüssigkristalldisplay von Vorteil. Derartige Orientierungsschichten bestehen in der Regel aus langkettigen Molekülen, vorzugsweise Polyimiden. Die Ausrichtung von Flüssigkristallen, die einer solcher Orientierungsschicht benachbart sind, hängt u. a. von der Orientierung der Moleküle in der Orientierungsschicht ab. Es ist bekannt, daß sich langkettige Moleküle dann, wenn sie gelöst sind und das Lösungsmittel strömt, in Strömungsrichtung einstellen. Beim erfindungsgemäßen Verfahren stellt sich zwischen der Substratoberfläche und dem der freien Rakel-Längskante benachbarten Bereich eine Strömung ein, die zum Ausrichten der Polymerketten führt. Das Verfahren ist somit in diesem Anwendungsfall von besonderem Vorteil, da es nicht nur zum Aufbringen der Orientierungsschicht, sondern zugleich zur Orientierung der Ketten dient.

KURZE BESCHREIBUNG DER ZEICHNUNGEN

Fig. 1 schematische perspektivische Ansicht einer Substratplatte mit über diese gezogener Rakel;

Fig. 2 und 3 Teilquerschnitte durch eine Substratplatte mit Querschnitt durch eine Rakel, wobei der geführte Bereich der Rakel einen großen Winkel (Fig. 2) bzw. einem kleinen Winkel (Fig. 3) zur Substratoberfläche einhält.

WEGE ZUM AUSFÜHREN DER ERFINDUNG -

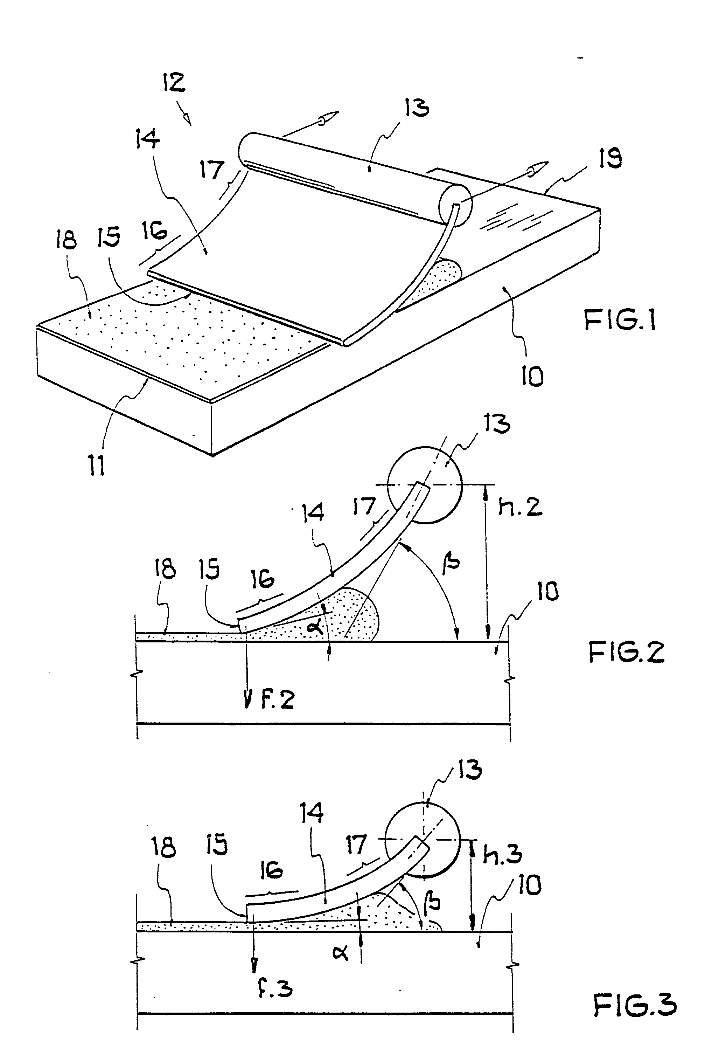

Die Substratplatte 10 gemäß Fig. 1 dient zum Herstellen eines Flüssigkristalldisplays. Sie ist zu diesem Zweck mit Leiterbahnen und unter Umständen mit einer Isolierschicht versehen. Diese Schichten sind nicht dargestellt, da es auf sie im folgenden nicht weiter ankommt. Fig. 1 stellt den Zustand dar, in dem gerade eine Substanz in flüssiger Form zum Herstellen einer Orientierungsschicht auf die Substratplatte 10 aufgebracht wird. Die Substanz in flüssiger Form ist eine Lösung von 1 Gew.% niedermolekularem Polyimid in Cyclopentanon. Die genannte Lösung wird zunächst über die gesamte Breite der Substratplatte 10 direkt anschließend an deren Vorderrand 11 aufgegossen. Sie kann auch auf die gesamte Substratoberfläche aufgesprüht werden. Sodann wird eine Rakel 12 aufgesetzt und in einer Haltung über die Substratplatte 10 geführt, wie sie weiter unten anhand der Fig. 2 und 3 näher erläutert wird. Die Rakel 12 besteht aus einer Halterung 13 und einem Rakelblatt 14.

Wie aus den Fig. 2 und 3 erkennbar, wird die Rakel 12 so geführt, daß der ihrer freien Längskante 15 benachbarte Bereich 16 im wesentlichen parallel zur Oberfläche der Substratplatte 10 verläuft. In der Haltung gem. Fig. 2 ist der Winkel α zwischen dem genannten freien Bereich 16 und der Substratoberfläche etwas größer als 0, während er bei der Haltung gemäß Fig. 3 ziemlich genau 0 ist. Die unterschiedlichen Größen des Winkels α rühren daher, daß bei der Haltung gemäß Fig. 2 der der Halterung 13 benachbarte geführte Bereich 17 einen größeren Winkel β zur Substratoberfläche 10 einschließt als bei der Haltung gemäß Fig. 3. Bei der Haltung gemäß Fig. 2 ist der Winkel β etwa 80°, während er bei der Haltung gemäß Fig. 3 etwa 45° ist. Außerdem ist im Fall der Fig. 2 die Höhe h.2 der Halterung über der Substratoberfläche etwas größer als die entsprechende Höhe h.3 bei der Haltung gem. Fig. 3.

Die unterschiedlichen Höhen und Winkel des geführten Bereiches 17 führen dazu, daß im Fall der Haltung gemäß Fig. 2 der freie Rand 15 mit einer Kraft f.2 auf die unter ihm liegende Flüssigkeitsschicht 18 drückt, die größer ist als die entsprechende Kraft f.3 im Fall der Haltung gem. Fig. 3. Die jeweilige Kraft zusammen mit der Viskosität der Flüssigkeit bestimmt die erzielbare Schichtdicke.

Es ist von Vorteil, daß bei diesem Verfahren die Schichtdicke mit Hilfe zweier Parameter, nämlich der Viskosität der zu verteilenden Flüssigkeit und der Andrückkraft des freien Bereichs 16 gegen den Flüssigkeitsfilm 18 bestimmt ist. So ist es beim Herstellen der genannten Polyimidschicht von Vorteil, die Viskosität relativ hoch zu wählen und mit einer relativ großen Andrückkraft zu arbeiten, da dies dazu beiträgt, daß die oben genannte Kettenausrichtung nicht durch thermische Bewegung weitgehend zerstört wird, wenn die Flüssigkeit unter der Rakel wieder hervortritt. Wenn die Viskosität hoch ist und ein schnellverdampfendes Lösungsmittel, z. B. das oben genannte Cyclopentanon verwendet wird, wird die durch das Überstreichen hervorgerufene Ausrichtung kaum gestört, bevor die Viskosität so weit ansteigt, daß ein weiteres Stören der Ausrichtung unterbunden ist.

Wenn die Rakel bis an die Hinterkante 19 der Substrate 10 gezogen ist, ist das Herstellen des Flüssigkeitsfilmes beendet. Dieser wird, falls erforderlich, getrocknet, im Fall der Substanzen gemäß dem Ausführungsbeispiel bei etwa 90 - 100 °C. Anschließend erfolgt ein Aushärtevorgang, im Beispielsfall bei etwa 300 °C.

Bei Verwenden einer Lösung von 0,5 Gew.% Polyimid in Cyclopentanon ließen sich Schichtdicken des ausgehärteten Polyimides bis herab zu 50 nm erzielen. Wurde die Andrückkraft im freien, im wesentlichen parallel geführten Bereich 16 erhöht, um zu noch geringeren Schichtdicken zu gelangen, führte dies dazu, daß das Rakelblatt 14 stellenweise ganz bis auf die Oberfläche des Substrates 10 drückte. Wurde eine Lösung von 2 Gew.-% Polyimid verwendet, ließen sich etwas dickere Schichten, von etwas über 100 nm erzielen.

Es hat sich herausgestellt, daß es von Vorteil ist, für das Rakelblatt 16 ein sehr weiches Material zu verwenden. Dies, weil dann ein Bereich von einigen mm bis cm Länge im wesentlichen parallel zur Substratoberfläche geführt wird, was Strömungsverhältnisse zur Folge hat, die das genannte Ausrichten der Ketten besonders begünstigen.

Aus bereits oben genannten Gründen wird als Material für das Rakelblatt 14 vorzugsweise ein Gummi aus einem fluorierten Polymer verwendet.


**Ansprüche**

1. Verfahren zum Aufbringen einer dünnen Schicht auf eine Substratplatte für einen flachen Anzeigeschirm, bei welchem Verfahren
- die Substanz in flüssiger Form in der gewünschten Flächenmenge auf der Substratplatte verteilt wird, und
- die verteilte Substanz ausgehärtet wird,
**dadurch gekennzeichnet,** daß
zum Verteilen eine Rakel verwendet wird und diese so gezogen wird, daß zumindest der ihrer freien Längskante benachbarte Bereich im wesentlichen parallel zur Substratoberfläche verläuft.

2. Verfahren nach Anspruch 1, **dadurch gekennzeichnet,** daß die Schichtdicke des beim Ziehen der Rakel erreichten Flüssigkeitsfilmes durch den Winkel eingestellt wird, unter dem der ihrer gehaltenen Längskante benachbarte Bereich zur Substratoberfläche geführt wird.

3. Verfahren nach Anspruch 1, **dadurch gekennzeichnet,** daß die Schichtdicke durch die Viskosität der aufgebrachten Flüssigkeit eingestellt wird.

4. Verfahren nach Anspruch 1, **dadurch gekennzeichnet,** daß als Substanz eine solche für die Orientierungsschicht eines Flüssigkristalldisplays verwendet wird.

5. Verfahren nach Anspruch 4, **dadurch gekennzeichnet,** daß die Substanz Polyimid ist, das in einem organischen Lösungsmittel gelöst ist.

6. Verfahren nach Anspruch 5, **dadurch gekennzeichnet,** daß eine Lösung von 0,5 - 2 Gew.% Polyimid verwendet wird.

7. Vorrichtung zum Aufbringen einer dünnen Schicht auf eine Substratplatte (10) für einen flachen Anzeigeschirm, **dadurch gekennzeichnet,** daß sie eine Rakel (12) aufweist, bei der zumindest der ihrer freien Längskante (15) benachbarte Bereich (16) weichelastisch ausgebildet ist.

8. Vorrichtung nach Anspruch 7, **dadurch gekennzeichnet,** daß das Blatt (14) der Rakel (12) aus einem Gummi aus einem fluorierten Polymer besteht.

FIG.1

FIG.2

FIG.3

Europäisches
Patentamt

**EUROPÄISCHER RECHERCHENBERICHT**

Nummer der Anmeldung

## EINSCHLÄGIGE DOKUMENTE

EP 89120492.7

| Kategorie | Kennzeichnung des Dokuments mit Angabe, soweit erforderlich, der maßgeblichen Teile | Betrifft Anspruch | KLASSIFIKATION DER ANMELDUNG (Int. Cl. K)5 |
|---|---|---|---|
| X | <u>CH - B5 - 624 529</u><br>(V.S. BANNIKOV et al.)<br>   * Ansprüche 1-3; Seite 4,<br>    linke Spalte, Zeile 38 -<br>    Seite 4, rechte Spalte,<br>    Zeile 46; Beispiele 1,2 * | 1,4,7 | G 02 F 1/01<br>G 02 F 1/1337<br>B 05 D 1/40<br>B 05 C 1/02 |
| Y | | 5 | |
| A | -- | 3,8 | |
| Y | <u>US - A - 3 994 567</u><br>(MATSUO et al.)<br>   * Spalte 3, Zeile 26 -<br>    Spalte 5, Zeile 34;<br>    Beispiele 1,2 * | 5 | |
| A | -- | 6 | |
| Y | <u>DE - A1 - 2 457 641</u><br>(HOFFMANN-LA ROCHE)<br>   * Seite 3, letzter Absatz -<br>    Seite 5, Zeile 5; Seite 8,<br>    letzter Absatz - Seite 10,<br>    3. Absatz; Fig. 1-3; An-<br>    sprüche 1-6 * | 1,2,4,<br>7 | |
| Y | <u>US - A - 4 133 917</u><br>(WALLSTEN)<br>   * Fig. 1,2; Spalte 3, Zeile<br>    49 - Spalte 4, Zeile 7;<br>    Spalte 4, Zeile 23 - Spalte<br>    5, Zeile 45 *<br>    ---- | 1,2,4,<br>7 | |

RECHERCHIERTE
SACHGEBIETE (Int. Cl. K)5

G 02 F
B 05 D
B 05 C
C 03 C

Der vorliegende Recherchenbericht wurde für alle Patentansprüche erstellt.

| Recherchenort | Abschlußdatum der Recherche | Prüfer |
|---|---|---|
| WIEN | 08-02-1990 | GRONAU |

KATEGORIE DER GENANNTEN DOKUMENTEN
X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder
   nach dem Anmeldedatum veröffentlicht worden ist
D : in der Anmeldung angeführtes Dokument
L : aus andern Gründen angeführtes Dokument

& : Mitglied der gleichen Patentfamilie, überein-
   stimmendes Dokument

EPA Form 1503 03 82